# EUROPÄISCHE PATENTSCHRIFT

(11) **EP 1 526 026 B1**
(45) Veröffentlichungstag und Bekanntmachung des Hinweises auf die Patenterteilung: **22.02.2012**
(21) Anmeldenummer: 05001412.5
(22) Anmeldetag: 12.10.1999
(51) Int. Cl.: B60K 17/26, B60K 17/00

(54) **Berghaltevorrichtung in einem Kraftfahrzeug und Verfahren zur Steuerung der Berghaltevorrichtung**
Hill holding device in a motor vehicle and method for controlling the hill holding device
Dispositif anti-recul dans un véhicule et procédure de commande du dispositif anti-recul

(30) Priorität: 19.11.1998 DE 19853345
(43) Veröffentlichungstag der Anmeldung: 27.04.2005
(62) Teilanmeldung aus: 99119968.8
(73) Patentinhaber: Volkswagen Aktiengesellschaft, 38436 Wolfsburg (DE)
(72) Erfinder: Petersen, Rainer, 38444 Wolfsburg (DE); Hoffmann, Lars, 04600 Altenburg (DE); Adamis, Panagiotis, 38442 Wolfsburg (DE)
(74) Vertreter: Hübsch, Dirk

(56) Entgegenhaltungen:
- DE-A1- 2 130 460
- DE-A1- 19 620 131

## Beschreibung

Die Erfindung beschäftigt sich mit einer Berghaltevorrichtung in einem Kraftfahrzeug und mit einem Verfahren zur Steuerung einer solchen Berghaltevorrichtung.

Beim Betrieb von Kraftfahrzeugen besteht das grundsätzliche Problem, daß es ausgehend von einem Fahrzeugstillstand an einer Steigung aufgrund von Koordinierungsschwierigkeiten zwischen einer Betätigung von Bremse, Gas und Kupplung zu einem unerwünschten Zurückrollen des Kraftfahrzeuges kommen kann. In Abhängigkeit von einer Gestaltung von Kupplung und Getriebe, sind unterschiedliche Berghalteeinrichtungen vorgeschlagen und realisiert worden. Neben Berghalteeinrichtungen, die mit Hilfsenergie betrieben werden und meist auf Kupplungen und Bremsen einwirken, sind auch solche bekannt geworden, die im wesentlichen mechanisch funktionieren und somit ohne Hilfsenergie betreibbar sind.

Aus der US 48 67 291 ist beispielsweise eine Berghaltevorrichtung bekannt, die eine lösbare Kugelfreilaufkupplung aufweist und mit einer Nebenwelle eines manuellen Schaltgetriebes in Verbindung steht. Durch die Verbindung mit der Nebenwelle, die unabhängig von der Fahrtrichtung des Kraftfahrzeuges vom Antriebsmotor immer in die gleiche Drehrichtung angetrieben wird, wirkt die Berghaltevorrichtung gleichermaßen bei einem Rückwärtsrollen mit eingelegtem Vorwärtsgang und bei einem Vorwärtsrollen mit eingelegtem Rückwärtsgang sperrend. Durch eine Betätigung eines hydraulischen Stellgliedes, mittels der die Kugelfreilaufkupplung entgegen einer Anpreßkraft eines Federelementes lösbar ist, wird ein bedarfsweises Zurückrollen ermöglicht, z.B. um das Schaltgetriebe zur Erleichterung eines Gangwechsels zu entlasten. In der DE 43 33 787 A1 wird eine Fahrzeuggetriebe - Berghalteeinrichtung mit ausrückbarer Zahnkupplung vorgeschlagen, die ebenfalls mit einer Nebenwelle eines manuellen Schaltgetriebes in Verbindung steht. In diesem Fall ist die Zahnkupplung selektiv durch eine Steuerung eines wirksamen hydraulischen Druckes ein- und auskuppelbar. Eine Sperrwirkung ergibt sich aus der besonderen Ausbildung der Zähne der Zahnkupplung, durch die eine Relativbewegung in einer . Drehrichtung ermöglicht und eine Bewegung in der Gegenrichtung verhindert wird. Aus der DE 196 20 131 A1 ist eine Rücklaufsperre für Kraftfahrzeuge bekannt, bei der eine Freilaufeinrichtung auf einer Getriebewelle eines Schaltgetriebes angeordnet ist. Die Rücklaufsperre ist nur bei einem Rückwärtsrollen mit eingelegtem Vorwärtsgang wirksam. Dadurch, daß die Rücklaufsperre eine mit dem hydraulischen Bremssystem des Kraftfahrzeuges in Verbindung stehende hydraulisch betätigbare Reibkupplung aufweist, ist die Rücklaufsperre zum Zwecke eines kontrollierten Rückwärtsrollens durch eine Betätigung des Bremspedales lösbar.

Alle beschriebenen Berghaltevorrichtungen stehen jeweils mit einem manuellen Schaltgetriebe in Verbindung und erfordern gewisse Modifikationen des jeweiligen Schaltgetriebes, z.B. in Form eines aus einem Getriebegehäuse überstehenden Wellenendes und von Befestigungsmöglichkeiten am Getriebegehäuse zur Aufnahme des Gehäuses der jeweiligen Berghaltevorrichtung.

Es stellt sich daher das Problem, eine mechanisch wirksame Berghaltevorrichtung bereitzustellen, die unabhängig von einer speziellen Getriebebauart weitgehend an einer beliebigen Stelle eines Antriebsstranges montierbar und in beiden Drehrichtungen sperrbar ist. Des weiteren soll ein Verfahren zur Steuerung einer solchen Berghaltevorrichtung aufgezeigt werden.

Die DE 2224484 stellt den nächstliegenden Stand der Technik dar und zeigt die Merkmale der Präambel der Ansprüche 1 und 9.

Das Problem der Berghaltevorrichtung wird durch die Merkmale des Anspruches 1 gelöst, weitere vorteilhafte Ausgestaltungsmerkmale der Berghaltevorrichtung ergeben sich aus den nachfolgenden Unteransprüchen 2 bis 8. Das Problem des Verfahrens wird durch die Merkmale des Anspruches 9 gelöst.

Die in einem Kraftfahrzeug vorgesehene Berghaltevorrichtung weist zwei Freilaufkupplungen auf, die in einem Antriebsstrang des Kraftfahrzeuges angeordnet sind. Die Freilaufkupplungen sind in entgegengesetzten Drehrichtungen sperrend wirksam und aktivierbar und deaktivierbar ausgebildet.

Die erfindungsgemäße Berghaltevorrichtung funktioniert rein mechanisch, d.h. sie ist ohne Hilfsenergie betreibbar, was im Hinblick auf den Gesamtwirkungsgrad des Antriebsstranges vorteilhaft ist. Die Berghaltevorrichtung kann im Prinzip an einer beliebigen Stelle des Antriebsstranges, z.B. zwischen einem Getriebe und einer Kardanwelle, zwischen der Kardanwelle und einem Achsdifferential, oder an einer beliebigen Stelle auf der Kardanwelle, angeordnet werden. Die Berghaltevorrichtung ist unabhängig von einer bestimmten Getriebebauart und kann sowohl bei Kraftfahrzeugen mit manuell bzw. automatisch schaltbaren Stufengetrieben als auch bei Kraftfahrzeugen mit stufenlos variablen Getrieben verwendet werden.

Damit ist das der Erfindung zugrundeliegende Problem gelöst.

Im folgenden werden zweckmäßige Ausgestaltungen der erfindungsgemäßen Berghaltevorrichtung näher erläutert.

Die Freilaufkupplungen der Berghaltevorrichtung weisen Stellelemente auf, durch die die Freilaufkupplungen aktivierbar und deaktivierbar sind. Die Stellelemente können mechanisch oder mit Hilfsenergie betreibbar ausgebildet sein. Durch eine Verwendung von Stellelementen wird eine unmittelbare Betätigung der Freilaufkupplungen zur Aktivierung und Deaktivierung vermieden und somit der Bedienungskomfort erhöht. Mechanische Stellelemente haben den Vorteil ohne Hilfsenergie auszukommen und sind daher für sehr sparsame Kraftfahrzeuge geeignet. Mit Hilfsenergie betreibbare Stellelemente sind in der Regel elektronisch steuerbar und eignen sich für eine rechnergestützte Betätigung der Freilaufkupplungen.

Die Stellelemente der Freilaufkupplungen können einfach oder doppelt wirkend ausgebildet sein. Einfach wirkend bedeutet, daß die Stellelemente nur in einer Richtung wirksam sind, d.h. nur zur Aktivierung oder Deaktivierung genutzt werden. Eine jeweilige Gegenbewegung erfolgt dann automatisch, beispielsweise durch Fliehkräfte, Federkräfte und /oder Kontaktkräfte zwischen entsprechend ausgebildeten Formteilen.

Die Berghaltevorrichtung weist eine Steuervorrichtung auf, die auf die Stellelemente der Freilaufkupplungen einwirkt und derart ausgebildet und angeordnet ist, daß die Freilaufkupplungen in Abhängigkeit von Getriebeparametem aktivierbar und deaktivierbar sind. Die Verwendung einer Steuervorrichtung ist vorteilhaft, da im Gegensatz zu einer manuellen Betätigung der Freilaufkupplungen eine Fehlbedienung weitgehend ausgeschlossen ist. Unter einer Betätigung der Freilaufkupplungen in Abhängigkeit von Getriebeparametern ist zu verstehen, daß bei einem eingelegten Vorwärtsgang diejenige der beiden Freilaufsperren aktiviert wird, durch die ein Rückwärtsrollen des Kraftfahrzeuges verhinderbar ist, und daß bei einem eingelegten Rückwärtsgang die andere der beiden Freilaufkupplungen aktiviert wird, durch die ein Vorwärtsrollen des Kraftfahrzeuges verhinderbar ist.

Die Steuervorrichtung der Berghaltevorrichtung kann mit einem Bremssystem in Verbindung stehen und derart ausgebildet und angeordnet sein, daß zur Aktivierung und Deaktivierung der Freilaufkupplungen eine Bremsbetätigung erforderlich ist. Zur Vermeidung von Belastungsspitzen im Antriebsstrang ist es vorteilhaft, wenn das Kraftfahrzeug bei einem Wechsel von einer der beiden Freilaufkupplungen auf die andere, d.h. beispielsweise bei einem Schaltvorgang von einem Vorwärtsgang in einen Rückwärtsgang, stillsteht, was weitgehend durch die Bremsbetätigung sichergestellt wird.

Die Steuervorrichtung der Berghaltevorrichtung ist derart ausgebildet und angeordnet , daß in einer Parksperrenfunktion eine gleichzeitige Aktivierung der beiden Freilaufkupplungen vorgesehn ist. Die erfindungsgemäße Berghaltevorrichtung kann in idealer Weise auch als Parksperre genutzt werden. Hierzu werden beide der Freilaufkupplungen in einer neutralen Schaltposition des Getriebes aktiviert und damit ein Wegrollen des Kraftfahrzeuges in beiden Richtungen durch ein Sperren des Antriebsstranges verhindert. Das gleichzeitige Aktivieren beider Freilaufkupplungen erfolgt vorteilhaft bei ruhendem, d.h. gebremstem Kraftfahrzeug.

Jede der Freilaufkupplungen kann als Zahnklauenkupplung ausgebildet sein, wobei jeweils ein mit einem rotierenden Bauteil des Antriebsstranges verbundenes Zahnklauenrad und ein mit einem feststehenden Bauteil des Kraftfahrzeuges in Verbindung stehendes schaltbares Sperrbauteil vorgesehen ist. Eine Zahnklauenkupplung ist ein bekanntes Maschinenelement, sie weist ein Zahnklauenrad und ein Sperrbauteil auf, die beide Zahnklauen aufweisen, die im eingerückten Zustand in Kontakt treten. Dabei sind die Zahnklauen derart ausgebildet und angeordnet, daß die Zahnklauen in einer bestimmten Drehrichtung übereinandergleiten, so daß eine Drehung des Zahnklauenrades möglich ist, während eine Bewegung in einer Gegenrichtung durch ein formschlüssiges Ineinandergreifen der Zahnklauen verhindert wird.

Jede der Freilaufkupplungen kann als Rollenfreilaufkupplung mit einer schaltbaren Kupplung ausgebildet sein, wobei jeweils die Rollenfreilaufkupplung mit dem rotierenden Bauteil des Antriebsstranges und einem rotierbaren Teil der schaltbaren Kupplung verbunden ist, und ein nichtrotierbarer Teil der schaltbaren Kupplung mit dem feststehenden Bauteil des Kraftfahrzeuges in Verbindung steht. Auch Rollenfreilaufkupplungen sind allgemein bekannt. Durch die schaltbare Kupplung wird eine Deaktivierung einer in einer Drehrichtung wirksamen Sperrwirkung ermöglicht.

Die Freilaufkupplungen können Federelemente aufweisen, die derart ausgebildet und angeordnet sind, daß die Sperrbauteile bzw. die schaltbaren Kupplungen in unbetätigtem Zustand der Stellelemente in einer ausgerückten Position gehalten werden. Eine solche Anordnung hat den Vorteil, daß eine ungewollte Aktivierung einer Freilaufkupplung, die z.B. bei einer Störung einer Fremdenergieversorgung auftreten kann, weitgehend ausgeschlossen ist. Nur die Aktivierung einer oder beider der Freilaufkupplungen erfordert Energie und setzt eine Aktivität des Fahrers oder des Steuergerätes voraus. Die Deaktivierung erfolgt automatisch durch Rückstellkräfte der Federn.

Die Freilaufkupplungen können Federelemente aufweisen, die derart ausgebildet und angeordnet sind, daß die Sperrbauteile bzw. die schaltbaren Kupplungen in unbetätigtem Zustand der Stellelemente in einer eingerückten Position gehalten werden. In diesem Fall wird das Fahrzeug automatisch und ohne Hilfsenergie durch Aktivierung beider Freilaufsperren in einer Parksperrenfunktion festgehalten. Zur Deaktivierung einer oder beider der Freilaufsperren ist eine Aktivität des Fahrers oder des Steuergerätes erforderlich. Damit ist neben einer sicheren Funktion der Parksperre eine erhöhte Diebstahlsicherheit gegeben.

Die Freilaufkupplungen können durch ein Kopplungselement in Verbindung stehen, das derart ausgebildet und angeordnet ist, daß ein Einrücken des Sperrbauteiles bzw. der schaltbaren Kupplung einer der Freilaufkupplungen ein Ausrücken des Sperrbauteiles bzw. der schaltbaren Kupplung der jeweils anderen Freilaufkupplung bewirkt. Außer in einer Parksperrenfunktion ist ein Unterbinden eines Zurückrollens immer in nur einer Richtung erforderlich. Es ist daher vorteilhaft, wenn die Aktivierung einer der beiden Freilaufkupplungen automatisch die Deaktivierung der jeweils anderen Freilaufkupplung zur Folge hat. Im übrigen reichen in diesem Fall einfach wirksame Stellelemerte aus. Federelemente, durch die Rückstellkräfte erzeugbar sind, können eingespart werden.

Das Verfahren zur Steuerung einer Berghaltevorrichtung in einem Kraftfahrzeug sieht vor, daß Getriebeparameter ermittelt werden, daß die Getriebeparameter von einem Steuergerät ausgewertet werden, und daß das Steuergerät derart auf zwei Freilaufkupplungen, die in entgegengesetzten Drehrichtungen sperrend wirksam sind, einwirkt, daß die Freilaufkupplungen in Abhängigkeit der Getriebeparameter aktiviert und deaktiviert werden. Durch das Steuergerät wird beispielsweise der aktuell wirksame Gang eines Getriebes, hier als Getriebeparameter bezeichnet, ermittelt und davon abhängig die geeignete der beiden Freilaufkupplungen aktiviert, bzw. im Falle einer neutralen Schaltstufe des Getriebes und ruhendem Fahrzeug beide Freilaufkupplungen als Parksperre aktiviert.

Das Verfahren sieht in einer ersten Form vor, daß eine Bremsbetätigung ermittelt werden kann, daß die Bremsbetätigung dann von dem Steuergerät registriert wird, und daß das Steuergerät derart auf die beiden Freilaufkupplungen einwirken kann, daß zur Aktivierung und Deaktivierung der Freilaufkupplungen eine Bremsbetätigung erforderlich ist. Ein Übergang von einer Vorwärtsfahrt eines Kraftfahrzeuges auf eine Rückwärtsfahrt ist mit einem Nulldurchgang der Fahrgeschwindigkeit verbunden, der im allgemeinen durch eine Bremsbetätigung erreicht wird. Zur Vermeidung von Belastungsspitzen und Komfortsteigerung ist es vorteilhaft und ohne großen Aufwand realisierbar, wenn zur Aktivierung und Deaktivierung einer oder beider der Freilaufkupplungen eine Bremsbetätigung erforderlich ist.

In einer zweiten Ausbildung kann eine Fahrtgeschwindigkeit ermittelt werden, wobei die Fahrtgeschwindigkeit von dem Steuergerät ausgewertet werden kann und das Steuergerät derart auf die beiden Freilaufkupplungen einwirken kann, daß beide Freilaufkupplungen bei einem Überschreiten einer festgelegten Grenzgeschwindigkeit deaktiviert werden, und daß zur Aktivierung der Freilaufkupplungen eine Unterschreitung der Grenzgeschwindigkeit erforderlich ist. Bei höheren Geschwindigkeiten ist die Aktivierung einer Freilaufsperre überflüssig, da in diesem Zustand ein ungewolltes Zurückrollen nicht auftreten kann. Zur Schonung mechanischer Bauteile der Freilaufkupplungen ist es daher von Vorteil, wenn eine aktivierte Freilaufkupplung automatisch bei Überschreiten der Grenzgeschwindigkeit deaktiviert wird und erst bei Unterschreiten der Grenzgeschwindigkeit wieder aktiviert wird. Da bei einem Eintreten eines ungewollten Zurückrollens zuvor ein Übergang von einer Bewegung in eine gewollte Richtung in eine Gegenrichtung erfolgt, ist die Aktivierung der entsprechenden Freilaufkupplung erst bei Unterschreiten der Grenzgeschwindigkeit auch aus Sicherheitsgründen völlig ausreichend.

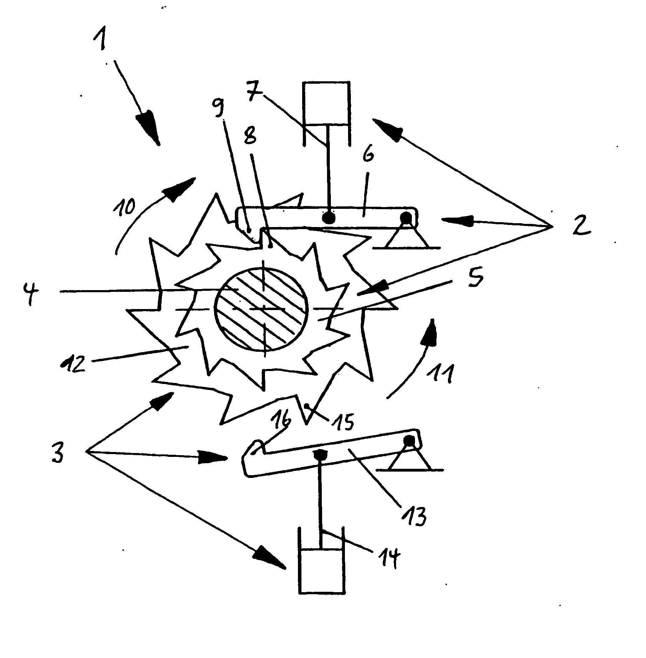

In der nachfolgenden Figur 1 ist eine Ausführungsform der erfindungsgemäßen Berghaltevorrichtung dargestellt.

Die Figur zeigt eine in einem Kraftfahrzeug angeordnete Berghaltevorrichtung 1, die zwei Freilaufkupplungen 2, 3 aufweist, eine erste Freilaufkupplung 2 und eine zweite Freilaufkupplung 3. Jede der beiden Freilaufkupplungen 2, 3 ist als Zahnklauenkupplung ausgebildet und steht mit einer Welle 4 eines Antriebsstranges des Kraftfahrzeuges in Verbindung. Die erste Freilaufkupplung 2 weist ein erstes, mit der Welle 4 verbundenes Zahnklauenrad 5, ein erstes Sperrbauteil 6 und ein erstes, mit dem ersten Sperrbauteil 6 in Verbindung stehendes Stellelement 7 auf. Mittels des ersten Stellelementes 7 ist das erste Sperrbauteil 6 in das erste Zahnklauenrad 5 einrück- und ausrückbar. Im in der Figur dargestellten eingerückten Zustand des ersten Sperrbauteiles 6, d.h. bei ineinandergreifenden Zahnklauen 8, 9 des ersten Zahnklauenrades 5 und des ersten Sperrbauteiles 6, ist die erste Freilaufkupplung 2 aktiviert. Durch die Ausbildung der Zahnklauen 8, 9 des ersten Zahnklauenrades 5 und des ersten Sperrbauteiles 6 wird im aktivierten Zustand der ersten Freilaufkupplung 2 eine Drehung der Welle 4 in einer vorbestimmten Drehrichtung 10 ermöglicht und eine Drehung der Welle 4 in einer Gegendrehrichtung 11 verhindert. Die zweite Freilaufkupplung 3 ist prinzipiell in gleicher Weise aufgebaut wie die erste Freilaufkupplung 2 und weist ein zweites, mit der Welle 4 verbundenes Zahnklauenrad 12, ein zweites Sperrbauteil 13 und ein zweites, mit dem zweiten Sperrbauteil in Verbindung stehendes Stellelement 14 auf. Im Unterschied zur ersten Freilaufkupplung 2 sind die Zahnklauen 15, 16 des zweiten Zahnklauenrades 12 und des zweiten Sperrbauteiles 13 derart ausgebildet, daß im aktivierten Zustand der zweiten Freilaufkupplung 3 eine Drehung der Welle 4 in der Gegendrehrichtung 11 ermöglicht und eine Drehung der Welle 4 in der vorbestimmten Drehrichtung 10 verhindert wird. Durch die Ausbildung und Anordnung der Berghaltevorrichtung 1 ist ein Rückwärtsrollen des Kraftfahrzeuges, z.B. bei eingelegtem Vorwärtsgang, und ein Vorwärtsrollen des Kraftfahrzeuges, z.B. bei eingelegtem Rückwärtsgang, zuverlässig verhinderbar. Des weiteren besteht die Möglichkeit, die Berghaltevorrichtung 1 durch eine gleichzeitige Aktivierung beider Freilaufsperren 2, 3 als Parksperre zu nutzen.

### BEZUGSZEICHENLISTE

- 1: Berghaltevorrichtung
- 2: erste Freilaufkupplung
- 3: zweite Freilaufkupplung
- 4: Welle
- 5: erstes Zahnklauenrad
- 6: erstes Sperrbauteil
- 7: erstes Stellelement
- 8: Zahnklaue (des ersten Zahnklauenrades)
- 9: Zahnklaue (des ersten Sperrbauteiles)
- 10: Drehrichtung
- 11: Gegendrehrichtung
- 12: zweites Zahnklauenrad
- 13: zweites Sperrbauteil
- 14: zweites Stellelement
- 15: Zahnklaue (des zweiten Zahnklauenrades)
- 16: Zahnklaue (des zweiten Sperrbauteiles)

## Patentansprüche

1. Berghaltevorrichtung (1) in einem Kraftfahrzeug mit zwei Freilaufkupplungen (2, 3), die in einem Antriebsstrang des Kraftfahrzeuges angeordnet und in entgegengesetzten Drehrichtungen sperrend wirksam sind, wobei die Freilaufkupplungen (2, 3) Stellelemente (7, 14) aufweisen und die Freilaufkupplungen (2, 3) durch die Stellelemente (7, 14) aktivierbar und deaktivierbar sind und wobei eine Steuervorrichtung zur Aktivierung und Deaktivierung der Stellelemente (7, 14) in Abhängigkeit von Getriebeparametern vorgesehen ist, **dadurch gekennzeichnet,**
- dass die Steuervorrichtung in einer Parksperrenfunktion eine gleichzeitige Aktivierung der beiden Freilaufkupplungen (2, 3) vorsieht, und
- dass die Steuervorrichtung mit einem Bremssystem in Verbindung steht und derart ausgebildet und angeordnet ist, dass zur Aktivierung und Deaktivierung der Freilaufkupplungen (2, 3) eine Bremsbetätigung erforderlich ist, oder
- dass die Fahrtgeschwindigkeit von der Steuervorrichtung auswertbar ist und die Steuervorrichtung derart auf die beiden Freilaufkupplungen (2, 3) einwirkt, dass beide Freilaufkupplungen (2, 3) bei einem Überschreiben einer festgelegten Grenzgeschwindigkeit deaktivierbar sind und dass zur Aktivierung der Freilaufkupplungen (2, 3) eine Unterschreitung der Grenzgeschwindigkeit erforderlich ist.

2. Berghaltevorrichtung nach Anspruch 1, **dadurch gekennzeichnet, dass** die Stellelemente (7, 14) mechanisch oder mit Hilfsenergie betreibbar ausgebildet sind.

3. Berghaltevorrichtung nach Anspruch 1 oder 2, **dadurch gekennzeichnet, dass** die Stellelemente (7, 14) einfach oder doppelt wirkend ausgebildet sind.

4. Berghaltevorrichtung nach einem der Ansprüche 1 bis 3, **dadurch gekennzeichnet, dass** jede der Freilaufkupplungen (2, 3) als Zahnklauenkupplung ausgebildet ist, wobei jeweils ein mit einem rotierenden Bauteil des Antriebsstranges verbundenes Zahnklauenrad (5, 12) und ein mit einem feststehenden Bauteil des Kraftfahrzeuges in Verbindung stehendes schaltbares Sperrbauteil (6, 13) vorgesehen ist.

5. Berghaltevorrichtung nach einem der Ansprüche 1 bis 3, **dadurch gekennzeichnet, dass** jede der Freilaufkupplungen (2, 3) als Rollenfreilaufkupplung mit einer schaltbaren Kupplung ausgebildet ist, dass jeweils die Rollenfreilaufkupplung mit dem rotierenden Bauteil des Antriebsstranges und einem rotierbaren Teil der schaltbaren Kupplung verbunden ist, und dass ein nichtrotierbarer Teil der schaltbaren Kupplung mit dem feststehenden Bauteil des Kraftfahrzeuges in Verbindung steht.

6. Berghaltevorrichtung nach Anspruch 4 oder 5, **dadurch gekennzeichnet, dass** die Freilaufkupplungen (2, 3) Federelemente aufweisen, die derart ausgebildet und angeordnet sind, dass die Sperrbauteile (6, 13) bzw. die schaltbaren Kupplungen in unbetätigtem Zustand der Stellelemente (7, 14) in einer ausgerückten Position gehalten werden.

7. Berghaltevorrichtung nach Anspruch 4 oder 5, **dadurch gekennzeichnet, dass** die Freilaufkupplungen (2, 3) Federelemente aufweisen, die derart ausgebildet und angeordnet sind, dass die Sperrbauteile (6, 13) bzw. die schaltbaren Kupplungen in unbetätigtem Zustand der Stellelemente (7, 14) in einer eingerückten Position gehalten werden.

8. Berghaltevorrichtung nach einem der Ansprüche 4 oder 5, **dadurch gekennzeichnet, dass** die Freilaufkupplungen (2, 3) durch ein Kopplungselement in Verbindung stehen, dass das Kopplungselement derart ausgebildet und angeordnet ist, dass ein Einrücken des Sperrbauteiles (6, 13) bzw. der schaltbaren Kupplung einer der Freilaufkupplungen (2, 3) ein Ausrücken des Sperrbauteiles (6, 13) bzw. der schaltbaren Kupplung der jeweils anderen Freilaufkupplung (2, 3) bewirkt.

9. Verfahren zur Steuerung einer Berhaltevorrichtung in einem Kraftfahrzeug nach Anspruch 1, wobei Getriebeparameter ermittelt werden, wobei die Getriebeparameter von einem Steuergerät ausgewertet werden, wobei das Steuergerät derart auf zwei Freilaufkupplungen (2, 3) die in entgegengesetzten Drehrichtungen sperrend wirksam sind, einwirkt, so dass die Freilaufkupplungen (2, 3) in Abhängigkeit der Getriebeparameter aktiviert und deaktiviert werden, **dadurch gekennzeichnet**,
- dass das Steuergerät in einer Parksperrenfunktion eine gleichzeitige Aktivierung bei beiden Freilaufkupplungen (2, 3) realisiert, und
- dass eine Bremsbetätigung ermittelt wird, dass die Bremsbetätigung von einem Steuergerät registriert wird, dass das Steuergerät derart auf die beiden Freilaufkupplungen (2, 3) einwirkt, dass zur Aktivierung und Deaktivierung der Freilaufkupplungen (2, 3) eine Bremsbetätigung erforderlich ist, oder
- dass eine Fahrtgeschwindigkeit ermittelt wird, dass die Fahrgeschwindigkeit von dem Steuergerät ausgewertet wird, und dass das Steuergerät derart auf beide der Freilaufkupplungen (2, 3) einwirkt, dass diese bei einem Überschreiten einer festgelegten Grenzgeschwindigkeit deaktiviert werden, und dass zur Aktivierung der Freilaufkupplungen (2, 3) eine Unterschreitung der Grenzgeschwindigkeit erforderlich ist.

## Claims

1. Hill-holding device (1) in a motor vehicle, with two overrunning clutches (2, 3) which are arranged in a drive train of the motor vehicle and have a blocking action in opposite directions of rotation, the overrunning clutches (2, 3) having actuating elements (7, 14), and the overrunning clutches (2, 3) being activatable and deactivatable by means of the actuating elements (7, 14), and a control device for activating and deactivating the actuating elements (7, 14) as a function of transmission parameters being provided, **characterized**
- **in that**, in a parking-lock function, the control device provides a simultaneous activation of both overrunning clutches (2, 3), and
- **in that** the control device is connected to a brake system and is designed and arranged in such a way that brake actuation is required in order to activate and deactivate the overrunning clutches (2, 3), or
- **in that** the driving speed can be evaluated by the control device and the control device acts on both overrunning clutches (2, 3) such that both overrunning clutches (2, 3) can be deactivated in the event of an overshooting of a fixed limit speed, and an undershooting of the limit speed is required in order to activate the overrunning clutches (2, 3).

2. Hill-holding device according to Claim 1, **characterized in that** the actuating elements (7, 14) are designed to be capable of being operated mechanically or by means of auxiliary power.

3. Hill-holding device according to Claim 1 or 2, **characterized in that** the actuating elements (7, 14) are designed to be single-acting or double-acting.

4. Hill-holding device according to one of Claims 1 to 3, **characterized in that** each of the overrunning clutches (2, 3) is designed as a toothed dog clutch, in each case a toothed dog wheel (5, 12) connected to a rotating component of the drive train and a switchable blocking component (6, 13) connected to a stationary component of the motor vehicle being provided.

5. Hill-holding device according to one of Claims 1 to 3, **characterized in that** each of the overrunning clutches (2, 3) is designed as a roller-type overrunning clutch with a switchable clutch, **in that** in each case the roller-type overrunning clutch is connected to the rotating component of the drive train and to a rotatable part of the switchable clutch, and **in that** a non-rotatable part of the switchable clutch is connected to the stationary component of the motor vehicle.

6. Hill-holding device according to Claim 4 or 5, **characterized in that** the overrunning clutches (2, 3) have spring elements which are designed and arranged in such a way that the blocking components (6, 13) or the switchable clutches are held in a disengaged position in the non-actuated state of the actuating elements (7, 14).

7. Hill-holding device according to Claim 4 or 5, **characterized in that** the overrunning clutches (2, 3) have spring elements which are designed and arranged in such a way that the blocking components (6, 13) or the switchable clutches are held in an engaged position in the non-actuated state of the actuating elements (7, 14).

8. Hill-holding device according to either one of Claims 4 and 5, **characterized in that** the overrunning clutches (2, 3) are connected by means of a coupling element, **in that** the coupling element is designed and arranged in such a way that an engagement of the blocking component (6, 13) or of the switchable clutch of one of the overrunning clutches (2, 3) causes a disengagement of the blocking component (6, 13) or of the switchable clutch of the other overrunning clutch (2, 3) in each case.

9. Method for controlling a hill-holding device in a motor vehicle according to Claim 1, transmission parameters being determined, the transmission parameters being evaluated by a control unit, and a control unit acting on two overrunning clutches (2, 3) which have a blocking action in opposite directions of rotation, so that the overrunning clutches (2, 3) are activated and deactivated as a function of the transmission parameters, **characterized**
- **in that**, in a parking-lock function, the control unit implements simultaneous activation in the case of both overrunning clutches (2, 3), and
- **in that** a brake actuation is determined, in that the brake actuation is registered by a control unit, in that the control unit acts on the two overrunning clutches (2, 3) in such a way that brake actuation is required in order to activate and deactivate the overrunning clutches (2, 3), or
- **in that** a driving speed is determined, in that the driving speed is evaluated by the control unit, and in that the control unit acts on both of the overrunning clutches (2, 3) such that they are deactivated in the event of an overshooting of a fixed limit speed, and that an undershooting of the limit speed is required in order to activate the overrunning clutches (2, 3).

## Revendications

1. Dispositif anti-recul (1) dans un véhicule automobile comprenant deux accouplements de roue libre (2, 3) qui sont disposés dans une transmission du véhicule automobile et qui agissent par blocage dans des directions de rotation opposées, les accouplements de roue libre (2, 3) présentant des actionneurs (7, 14) et les accouplements de roue libre (2, 3) pouvant être activés et désactivés par les actionneurs (7, 14) et un dispositif de commande étant prévu pour l'activation et la désactivation des actionneurs (7, 14) en fonction de paramètres de la transmission, **caractérisé en ce que**
- le dispositif de commande prévoit, dans une fonction de verrouillage de stationnement, une activation simultanée des deux accouplements de roue libre (2, 3), et
- **en ce que** le dispositif de commande est en liaison avec un système de frein et est conçu et disposé de telle sorte que l'on ait besoin, pour l'activation et la désactivation des accouplements de roue libre (2, 3), d'un actionnement des freins, ou
- **en ce que** la vitesse de conduite peut être analysée par le dispositif de commande et le dispositif de commande agit sur les deux accouplements de roue libre (2, 3) de telle sorte que les deux accouplements de roue libre (2, 3), en cas de dépassement d'une vitesse limite établie, puissent être désactivés, et que, pour l'activation des accouplements de roue libre (2, 3), un passage en dessous de la vitesse limite soit nécessaire.

2. Dispositif anti-recul selon la revendication 1, **caractérisé en ce que** les actionneurs (7, 14) sont réalisés de manière à pouvoir être entraînés mécaniquement ou avec une source d'énergie auxiliaire.

3. Dispositif anti-recul selon la revendication 1 ou 2, **caractérisé en ce que** les actionneurs (7, 14) sont réalisés de manière à avoir une action simple ou double.

4. Dispositif anti-recul selon l'une quelconque des revendications 1 à 3, **caractérisé en ce que** chacun des accouplements de roue libre (2, 3) est réalisé sous forme d'accouplement à griffes denté, une roue à griffes dentée (5, 12) connectée à un composant rotatif de la transmission et un composant de blocage (6, 13) commutable en liaison avec un composant fixe du véhicule automobile étant prévus dans chaque cas.

5. Dispositif anti-recul selon l'une quelconque des revendications 1 à 3, **caractérisé en ce que** chacun des accouplements de roue libre (2, 3) est réalisé sous forme d'accouplement de roue libre à rouleau avec un embrayage, **en ce que** l'accouplement de roue libre à rouleau est à chaque fois connecté au composant rotatif de la transmission et à une partie rotative de l'embrayage, et **en ce qu'**une partie non rotative de l'embrayage est en liaison avec le composant fixe du véhicule automobile.

6. Dispositif anti-recul selon la revendication 4 ou 5, **caractérisé en ce que** les accouplements de roue libre (2, 3) présentent des éléments à ressort qui sont réalisés et disposés de telle sorte que les composants de blocage (6, 13) ou les embrayages soient maintenus dans l'état non actionné des actionneurs (7, 14) dans une position débrayée.

7. Dispositif anti-recul selon la revendication 4 ou 5, **caractérisé en ce que** les accouplements de roue libre (2, 3) présentent des éléments à ressort qui sont réalisés et disposés de telle sorte que les composants de blocage (6, 13) ou les embrayages soient maintenus dans l'état non actionné des actionneurs (7, 14) dans une position embrayée.

8. Dispositif anti-recul selon la revendication 4 ou 5, **caractérisé en ce que** les accouplements de roue libre (2, 3) sont connectés au moyen d'un élément de couplage, **en ce que** l'élément de couplage est réalisé et disposé de telle sorte qu'un embrayage du composant de blocage (6, 13) ou de l'embrayage de l'un des accouplements de roue libre (2, 3) provoque un débrayage du composant de blocage (6, 13) ou de l'embrayage de l'autre accouplement de roue libre respectif (2, 3).

9. Procédé de commande d'un dispositif anti-recul dans un véhicule automobile selon la revendication 1, dans lequel on détecte des paramètres de transmission, les paramètres de transmission sont analysés par un appareil de commande, l'appareil de commande agit sur deux accouplements de roue libre (2, 3) qui agissent par blocage dans des directions de rotation opposées, de telle sorte que les accouplements de roue libre (2, 3) soient activés et désactivés en fonction des paramètres de transmission,
**caractérisé en ce que**
- l'appareil de commande réalise dans une fonction de verrouillage de stationnement, une activation simultanée des deux accouplements de roue libre (2, 3), et
- **en ce qu'**un actionnement des freins est détecté, **en ce que** l'actionnement des freins est enregistré par un appareil de commande, **en ce que** l'appareil de commande agit sur les deux accouplements de roue libre (2, 3) de telle sorte que pour l'activation et la désactivation des accouplements de roue libre (2, 3), on ait besoin d'un actionnement des freins, ou
- **en ce qu'**une vitesse de conduite est détectée, **en ce que** la vitesse de conduite est analysée par l'appareil de commande, et **en ce que** l'appareil de commande agit sur les deux accouplements de roue libre (2, 3) de telle sorte que ceux-ci, en cas de dépassement d'une vitesse limite établie, soient désactivés, et que, pour l'activation des accouplements de roue libre (2, 3), un passage en dessous de la vitesse limite soit nécessaire.
